# EUROPÄISCHE PATENTSCHRIFT

(11) **EP 0 996 753 B1**
(45) Veröffentlichungstag und Bekanntmachung des Hinweises auf die Patenterteilung: **14.11.2001**
(21) Anmeldenummer: 98942568.1
(22) Anmeldetag: 17.07.1998
(51) Int. Cl.: C22C 21/00, F16C 33/12, C22F 1/04, B32B 15/01

(54) **GLEITLAGERWERKSTOFF**
SLIDE BEARING MATERIAL
MATERIAU POUR PALIERS LISSES

(30) Priorität: 17.07.1997 DE 19730549
(43) Veröffentlichungstag der Anmeldung: 03.05.2000
(73) Patentinhaber: KS Gleitlager GmbH, 68789 St. Leon-Rot (DE)
(72) Erfinder: STEFFENS, Thomas, D-74906 Bad-Rappenau (DE); SCHUBERT, Werner, D-69168 Wiesloch (DE)
(74) Vertreter: Dreiss, Fuhlendorf, Steimle & Becker
(86) Internationale Anmeldenummer: EP9804461
(87) Internationale Veröffentlichungsnummer: WO9904049

(56) Entgegenhaltungen:
- DE-A- 3 214 303
- DE-A- 4 004 703
- DE-A- 4 312 537
- DE-A- 4 332 433
- DE-A- 19 612 657

## Beschreibung

Die Erfindung betrifft einen Gleitlagerwerkstoff auf Aluminiumbasis, umfassend eine Aluminiumlegierung mit 10 bis 25 Gew.-% Zinn und Zusätzen von Kupfer, Nickel und Mangan.

Ein derartiger Gleitlagerwerkstoff ist beispielsweise aus der DE 40 04 703 A1 bekannt. Das einzige Ausführungsbeispiel lehrt eine Aluminiumlegierung mit der Zusammensetzung AlSn10Ni2Mn1Cu0,5, wobei anstelle des Zinnzusatzes auch ein Bleizusatz verwendet werden kann. Bei derartigen als Gleitlagerwerkstoff verwandten Aluminiumlegierungen wird eine "weiche Phase" in Form einer Zinn- oder auch Bleiausscheidung für die Gewährleistung guter Notlaufeigenschaften eines aus dem Gleitlagerwerkstoff hergestellten Lagers benötigt. Harte Schmutzpartikel oder Abrieb werden in dieser weichen Phase aufgenommen oder eingebettet. Die weiche Phase vermag sich auch geometrischen Bedingungen anzupassen. Die weiche Phase aus in Aluminium nicht löslichem Zinn ist in Form blockiger Ausscheidungen in dem matrixbildenden Aluminium aufgenommen.

Um die Festigkeit der Aluminiummatrix zu erhöhen, ist es bekannt, Kupfer zuzugeben. Kupfer bildet mit Aluminium intermetallische Phasen, sog. Hartstoffphasen, wie Al₂Cu und feinverteilte Vorstufen hiervon, die eine Erhöhung der Festigkeit der Aluminiummatrix bewirken, sofern sie in möglichst fein verteilten Ausscheidungen vorliegen (≤ 1 *µ*m). Hierdurch wird die Belastbarkeit und Ermüdungsfestigkeit eines aus der Legierung gefertigten Gleitlagerwerkstoffs erhöht. Eine derartige Aluminiumlegierung AlSn15Cu2 ist unter dem Handelsnamen KS 985.3 durch die Anmelderin bekannt geworden. Diese Legierung besitzt bereits ausgezeichnete tribologische Eigenschaften; sie bedarf aber für Anwendungen unter Extremlastbedingungen, wie zum Beispiel als Pleuellager in modernen Brennkraftmaschinen, der Verbesserung.

Dies wurde bei der aus der DE 40 04 703 A1 bekannten Aluminiumlegierung durch die Zugabe von Mangan und Nickel zu erreichen versucht, wodurch der Anteil der Härtstoffphasen wohl erhöht werden sollte, und zwar nach Angaben dieser Druckschrift im Besonderen in der Umgebung der Zinnausscheidungen, um durch die Affinität des Zinns zu Nickel und zu Mangan eine verbesserte Bindung der Zinnausscheidung in der Aluminiummatrix zu erreichen.

Es besteht auch die Vorstellung, dass sich ein gewisser Anteil von Hartstoffphasen oder -ausscheidungen positiv auf einen guten Verschleißwiderstand auswirkt, indem die an der Oberfläche befindlichen Hartstoffphasen ein Feinschleifen des Gleitpartners, z.B. der Kurbelwelle, bewirken, so dass Rauheitsspitzen des aus Stahl bestehenden Gleitpartners abgetragen werden können. Auch werde durch Hartstoffphasen die Belastbarkeit des Lagerwerkstoffs erhöht.

Die Erhöhung des Anteils intermetallischer Hartstoffphasen bringt aber auch Probleme im Hinblick auf die Ermüdungsfestigkeit und auch im Hinblick auf die Herstellbarkeit mit sich. So treten beim Umformen, insbesondere beim Kaltplattieren der Aluminiumlegierung auf Stahl, was einen Stich von etwa 50 % Umformung erfordert, Risse auf.

Der vorliegenden Erfindung liegt die Aufgabe zugrunde, eine Legierung der eingangs beschriebenen Art dahingehend zu verbessern, dass sie eine höhere Belastbarkeit als die bekannte Aluminium-Zinn-Kupfer oder Aluminium-Zinn-Kupfer-Nickel-Legierung und eine bessere Umformbarkeit, insbesondere Plattierbarkeit, aufweist.

Diese Aufgabe wird durch einen Gleitlagerwerkstoff gemäß Anspruch 1 gelöst.

Mit der Erfindung wird vorgeschlagen, in die Aluminiumlegierung Kupfer und Nickel in einem solchen Maße zuzugeben, dass sich Nickel und Kupfer beinhaltende intermetallische Phase, beispielsweise die intermetallische Phase Al₃(Ni,Cu) bildet. Dies bedeutet, dass Kupfer und Nickel vorzugsweise zu gleichen Anteilen zugegeben werden. Das vorstehend erwähnte Verhältnis der Kupfer- und Nickelanteile liegt vorzugsweise zwischen 0,8 und 1,2.

Es wurde erkannt, dass Nickel innerhalb der Aluminiumlegierung eine ortsfeste und im Unterschied zu ausschließlich Kupfer enthaltenden intermetallischen Aluminid-Phasen wie Al₂Cu, glühstabile intermetallische Phase ausbildet, die gewissermaßen als Kupfer-Senke wirkt. Hierdurch wird verhindert, dass das Kupfer im Zuge der

Wärmebehandlung innerhalb der Matrixe wandert und eine Vergröberung der Ausscheidungsphasen mit sich bringt (man spricht hier von Ostwald-Reifung). Eine derartige Vergröberung ist unerwünscht, da die groben Ausscheidungen potentielle Ermüdungs- oder Rissbildungsstellen innerhalb der Legierung darstellen, welche die Umformbarkeit verschlechtern und die Belastbarkeit wiederum herabsetzten. Al₂Cu-Ausscheidungen neigen infolge der relativ hohen Löslichkeit des Kupfers im Aluminiummischkristall in besonderem Maße dazu, zu vergröbern.

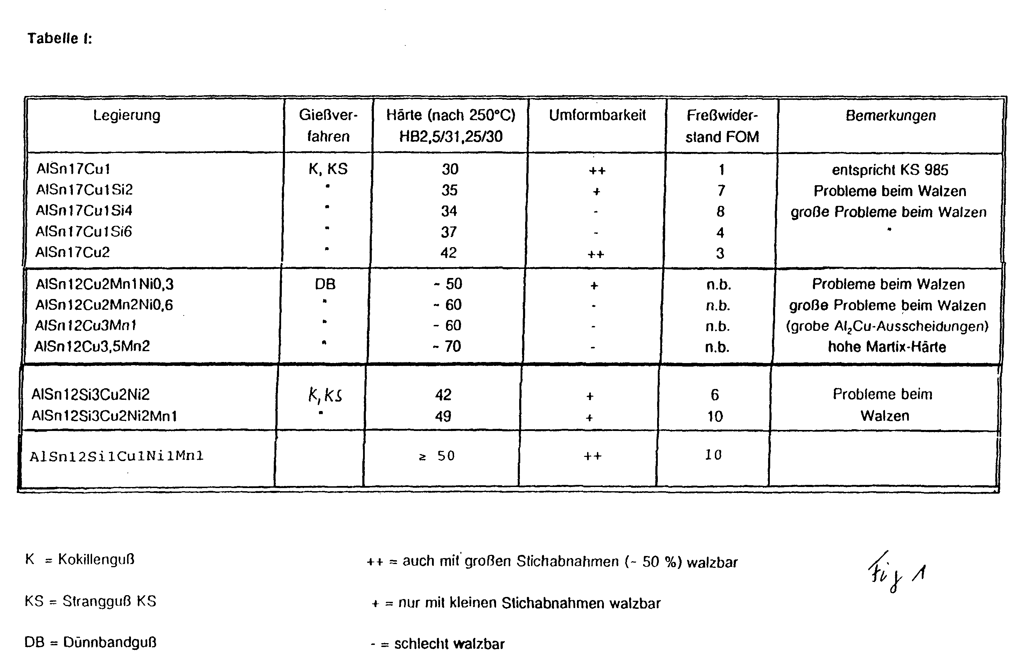

Mit der Erfindung wurde desweiteren erkannt, dass eine Zugabe von Mangan unter dem Gesichtspunkt einer Schwingfestigkeitserhöhung ohne die gleichzeitige Zugabe von Silizium nachteilig ist. So wurde z.Bsp. bei der Legierung AlSn12Cu2Mn2Ni 0,6 erkannt, dass sie aufgrund relativ grober Al₂Cu-Ausscheidungen und durch eine zu hohe Matrixhärte, die durch die Elemente Kupfer und Mangan hervorgerufen ist, eine sehr schlechte Walzbarkeit aufweist. Die aus der Tabelle I gemäß Figur 1 erhaltene Proben wurden im Dünnbandguß hergestellt. Es handelt sich hierbei nicht um den Stand der Technik.

Wie der Tabelle I weiter zu entnehmen ist, vermag zwar die Zugabe von Silizium zu Aluminium-Zinn-Kupfer-Legierung der gattungsgemäßen Art eine Erhöhung der Härte und eine Reduzierung der Anfälligkeit für fressenden Verschleiß zu bewirken; die Umformbarkeit verschlechtern sich hierdurch jedoch in starkem Maße. Die Proben wurden im Strangguß hergestellt. Auch sie bilden keinen Stand der Technik.

Die vorletzte Zeile der Tabelle 1 zeigt eine AlSn12Si3Cu2Ni2Mn1-Legierung. Sie weist eine Härte von 49 HB 2,5/31 und zeigt hervorragende tribologische Eigenschaften. Auch bei dieser Zusammenfassung ist die Umformbarkeit aber nicht zufriedenstellend und es gibt Probleme beim Walzen.

Die fünfte Spalte der Tabelle zeigt die Ergebnisse einer Messung des Fresswiderstands; hierbei wurden Gütezahlen von 1 bis 10 vergeben, wobei eine Gütezahl oberhalb von 5 gute tribologische Eigenschaften bedeutet. Hierfür wird eine aus Kurbelwellenstahl bestehende Scheibe horizontal angeordnet und in Drehung versetzt. Auf die rotierende Scheibenfläche wird ein Stift oder plättchenförmiger Abschnitt aus dem zu testenden Gleitlagerwerkstoff unter Mangelschmierbedingungen aufgedrückt. Es wird nun die Zeit bis zum Auftreten erster Reibschweißerscheinungen (Fressen) gemessen. Die Sollzeit wurde in Abhängigkeit des Anpressdrucks und der Drehgeschwindigkeit der Scheibe auf 90 Minuten gesetzt, was einer Gütezahl von 10 entsprechen soll. Wenn es bereits nach 45 Minuten zu ersten Reibschweißerscheinungen kommt, so entspricht dies einer Gütezahl von 5, und wenn es bereits in den ersten 9 Minuten zu Fresserscheinungen kommt, enspricht dies der völlig ungenügenden Gütezahl 1. Die in der Tabelle angegebenen Werte verstehen sich als Mittelwerte aus wenigstens fünf Stift/Scheibe-Untersuchungen.

Mit der erfindungsgemäßen Legierung AlSn12Cu1Ni1Mn1Si1 werden Matrixhärten von über 50 HB 2,5/31,25/30 und eine sehr gute Unformbarkeit erreicht. Die Gütezahl für den Fresswiderstand ist 10. Das Legierungsmaterial ist auch bei großen Stichabnahmen von mehr als 50 % gut walzbar. Dies wird auf ein Zusammenwirken von Kupfer und Nickel und auf ein Zusammenwirken von Mangan und Silizium zurückgeführt. Hohe Matrixgehalte an Mangan und Kupfer führen zu einer hohen Matrixhärte (Mischkristallhärtung). Im Zuge einer Wärmebehandlung besteht die Tendenz zur Bildung grober bzw. vergröbernder Hartphasen vom Typ Aluminium-Kupfer-Mangan, die sich auf die Umformbarkeit und Ermüdungsfestigkeit negativ auswirken. Durch die Zugabe von Nickel und Silizium wird die Ausbildung grober Aluminium-Kupfer-Mangan-Phasen verhindert oder zumindest deutlich verringert, da bevorzugt Nickel-Kupfer-Aluminid einerseits und Mangan-Silizium-Aluminid andererseits gebildet wird, welches kaum zu Vergröberungserscheinungen neigt. Die Nickel-Kupfer-Aluminide liegen aber im Unterschied zu reinen Kupfer-Aluminiden auch nach einer Wärmebehanldung bei 250 Grad feinverteilt vor. Die Ursache hierfür ist die äußerst geringe Löslichkeit von Nickel im Aluminiummischkristall.

Die bevorzugte Ausscheidungsphase des Mangans in Anwesenheit von Silizium ist die thermisch stabile (Mn)₃Si₂Al₁₅, die das Zusammenwirken des Mangans mit Silizium verdeutlicht. Die Zugabe von Silizium und Nickel verhindert somit die Bildung bei der Wärmebehandlung vergröbernder Kupfer-Mangan-Aluminide. Silizium ist der bevorzugte "Partner" des Mangans, was sich aus den vorstehend genannten Gründen als vorteilhaft erweist.

Die wesentliche Wirkung des beanspruchten Nickelgehalts in Abhängigkeit von Kupfergehalt besteht darin, Kupfer in Form von Nickel-Kupfer-Aluminid zu binden und dadurch die Ausscheidung von Al₂Cu zu unterdrücken bzw. zu reduzieren. Diese Al₂Cu-Ausscheidungen wirken sich besonders schädlich auf die Umformbarkeit aus, weil sie im Gegensatz zu den thermisch stabilen Nickel-Kupfer-Aluminiden bei der Wärmebehandlung vergröbern und dadurch potentielle Ausgangspunkte für Risse darstellen. Daneben liegt ein Teil des Kupfers in der erwünschten feinverteilten Form in der Matrix vor.

Die in der Tabelle II gemäß Figur 2 ausgeführten Legierungen wurden nach einer Wärmebehandlung bei 510° für eine Dauer von acht Stunden und anschließender Ofenabkühlung auf Ihre Zusammensetzung hin untersucht. Es wurden dabei reine Zinn- und Siliziumphasen sowie das unerwünschte zur Vergröberung neigende Kupfer-Aluminid Al₂Cu sowie das Mangan-Silizium-Aluminid Al₁₅Si₂(CuMnFe)₃, das aufgrund der hohen Affinität
des Mangans zum Silizium kaum Kupfer und Eisen sondern in der Hauptsache Mangan enthält, und das Nickel-Kupfer-Aluminid Al₃(NiCu) festgestellt.

Man erkennt aus der Tabelle, dass in der erfindungsgemäßen Legierung AlSn12Cu1Mn1Si1Ni1 (vorletzte Zeile) zwar das erwünschte Mangan-Silizium-Aluminid und Kupfer-Nickel-Aluminid vorhanden ist, dass aber das unerwünschte Kupfer-Aluminid in kaum nachweisbarer Menge vorhanden ist, während bei der Legierung AlSn12Cu2Mn1Si2Ni1 das störende Kupfer-Aluminig in solchem Maße vorhanden ist, dass es sich negativ auf die Unformbarkeit auswirkt.

Bei der Legierung AlSn12Cu2,5Mn1Si3 (zweite Zeile), die kein Nickel enthält, tritt Al₂Cu sogar in größeren Mengen auf.

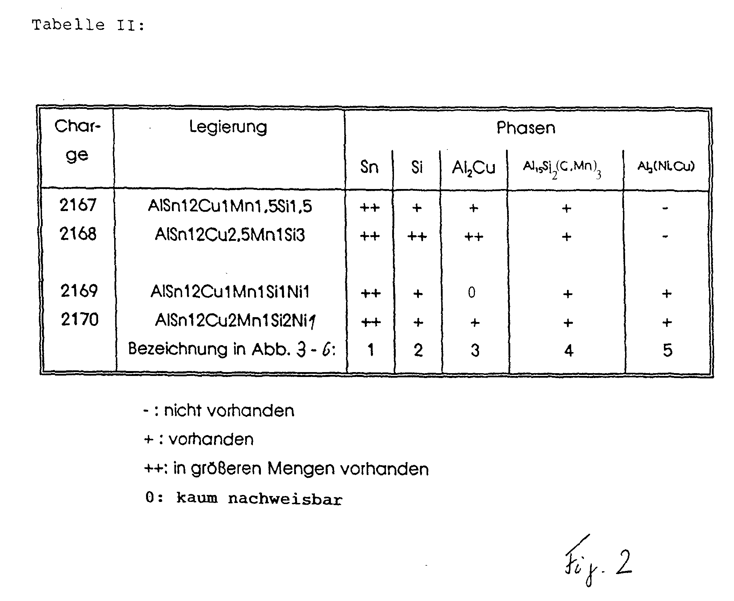

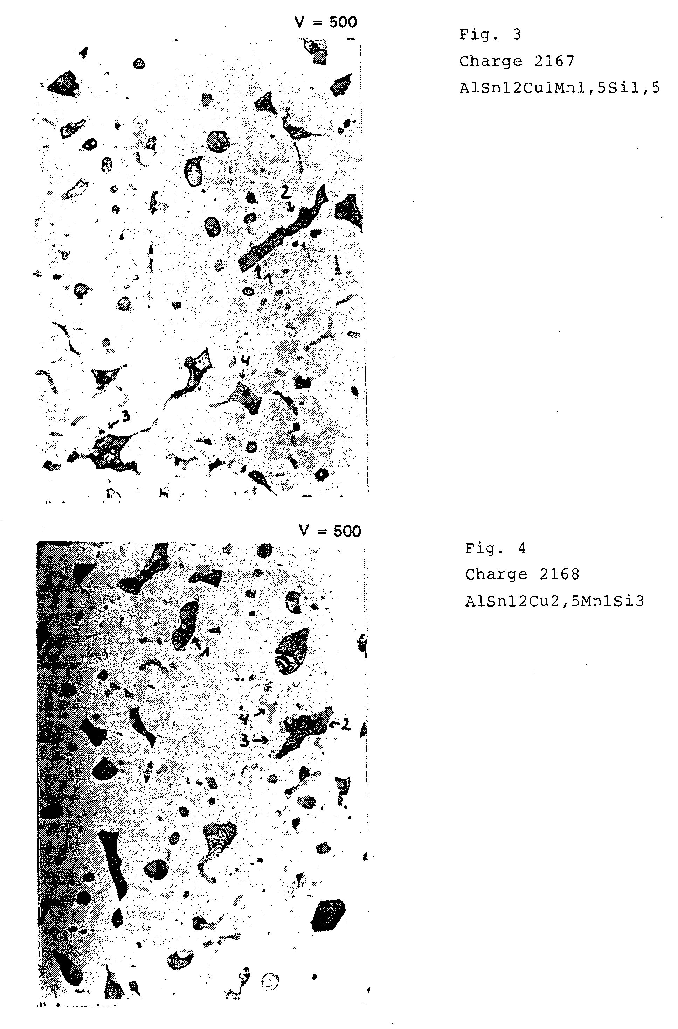

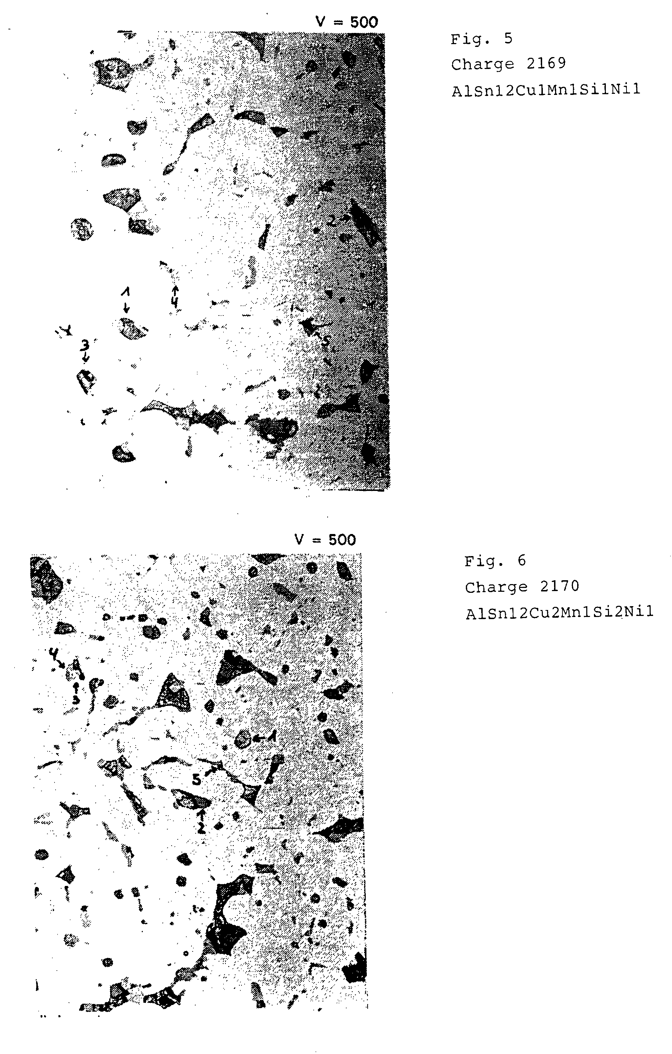

Die Figuren 3 bis 6 zeigen photographische Aufnahmen eines leicht angeätzten Längsschliffs der Legierungen in Tabelle II in gerasteter Darstellung, und zwar nach der beschriebenen Wärmebehandlung. Die Phasen gemäß Tabelle II sind durch eingefügte Pfeile 1 bis 5 bezeichnet.

## Patentansprüche

1. Gleitlagerwerkstoff aus Aluminiumlegierung umfassend eine Aluminiumlegierung mit 10 bis 25 Gew.-% Zinn und Zusätzen von Kupfer, Nickel und Mangan, **wobei** Kupfer, Nickel und Mangan jeweils
einen gewichtsprozentualen Anteil von 0,2 bis 2 Gew.-% aufweisen und als weiterer Zusatz 0,2 bis 2 Gew.-% Silizium vorhanden ist, und wobei das Verhältnis des gewichtsprozentualen Anteils von Kupfer zum gewichtsprozentualen Anteil von Nickel und das Verhältnis des gewichtsprozentualen Anteils von Mangan zum gewichtsprozentualen Anteil von Silizium zwischen 0,6 und 1,5 liegt.

2. Gleitlagerwerkstoff nach Anspruch 1, **dadurch gekennzeichnet, dass** das Verhältnis des gewichtsprozentualen Anteils von Kupfer zum gewichtsprozentualen Anteil von Nickel zwischen 0,8 und 1,2 liegt.

3. Gleitlagerwerkstoff nach Anspruch 1 oder 2, **dadurch gekennzeichnet, dass** das Verhältnis des gewichtsprozentualen Anteils von Mangan zum gewichtsprozentualen Anteil von Silizium zwischen 0,8 und 1,2 liegt.

4. Gleitlagerwerkstoff nach Anspruch 1, 2 oder 3, **gekennzeichnet durch** die intermetallische Phase Al₃(Ni,Cu) bildende Hartstoffausscheidungen.

5. Gleitlagerwerkstoff nach einem der vorstehenden Ansprüche, **dadurch gekennzeichnet, dass** der jeweilige gewichtsprozentuale Anteil von Kupfer und Nickel 0,7 - 1,3 Gew.-% beträgt.

6. Gleitlagerwerkstoff nach einem der vorstehenden Ansprüche, **dadurch gekennzeichnet, dass** der jeweilige gewichtsprozentuale Anteil von Mangan und Silizium 0,7 - 1,3 Gew.-% beträgt.

7. Gleitlagerwerkstoff nach einem oder mehreren der vorstehenden Ansprüche, **dadurch gekennzeichnet, dass** der gewichtsprozentuale Gehalt an Zinn 10 bis 20, inbesondere 10 bis 15 Gew-%, beträgt.

8. Gleitlagerverbundwerkstoff mit einer hartmetallischen Stützschicht und einer darauf aufgebrachten, insbesondere aufgewalzten metallischen Gleitschicht, **dadurch gekennzeichnet, dass** die Gleitschicht einen Gleitlagerwerkstoff nach einem der vorstehenden Ansprüche umfasst.

## Claims

1. Sliding bearing material made of aluminium alloy comprising an aluminium alloy with 10 to 25 wt.% tin and addition of copper, nickel and manganese, wherein copper, nickel and manganese are each in a percentage of 0.2 to 2 wt.% and 0.2 to 2 wt.% silicon is present as a further addition, and wherein the ratio of the percentage of copper to the percentage of nickel and the ratio of the percentage of manganese to the percentage of silicon is between 0.6 and 1.5.

2. Sliding bearing material according to claim 1, **characterised in that** the ratio of the percentage of copper to the percentage of nickel is between 0.8 and 1.2.

3. Sliding bearing material according to claim 1 or 2, **characterised in that** the ratio of the percentage of manganese to the percentage of silicon is between 0.8 and 1.2.

4. Sliding bearing material according to claim 1, 2 or 3, **characterised by** hard material deposits forming the intermetallic phase Al₃(Ni,Cu).

5. Sliding bearing material according to any one of the preceding claims, **characterised in that** the respective percentage of copper and nickel is 0.7 to 1.3 wt.%.

6. Sliding bearing material according to any one of the preceding claims, **characterised in that** the respective percentage of manganese and silicon is 0.7 to 1.3 wt.%

7. Sliding bearing material according to one or more of the preceding claims, **characterised in that** the tin content is 10 to 20 wt.%, in particular 10 to 15 wt.%.

8. Sliding bearing composite material with a hard metallic support layer and a metallic sliding layer applied, in particular rolled thereon, **characterised in that** the sliding layer comprises a sliding bearing material according to any one of the preceding claims.

## Revendications

1. Matériau pour palier lisse en alliage d'aluminium, comportant un alliage d'aluminium contenant 10 à 25 % en poids d'étain ainsi que du cuivre, du nickel et du manganèse en tant qu'éléments d'addition, le cuivre, le nickel et le manganèse étant chacun présents à hauteur de 0,2 à 2 % en poids, du silicium étant présent, en tant qu'autre élément d'addition, à hauteur de 0,2 à 2 % en poids, et le rapport des pourcentages pondéraux du cuivre sur le nickel et du manganèse sur le silicium étant compris entre 0,6 et 1,5.

2. Matériau pour palier lisse selon la revendication 1, **caractérisé en ce que** le rapport des pourcentages pondéraux du cuivre sur le nickel est compris entre 0,8 et 1,2.

3. Matériau pour palier lisse selon la revendication 1 ou 2, **caractérisé en ce que** le rapport des pourcentages pondéraux du manganèse sur le silicium est compris entre 0,8 et 1,2.

4. Matériau pour palier lisse selon la revendication 1, 2 ou 3, **caractérisé par** les dépôts de substance dure formant la phase intermétallique Al₃ (Ni, Cu).

5. Matériau pour palier lisse selon l'une des revendications précédentes, **caractérisé en ce que** les pourcentages pondéraux du cuivre et du nickel sont compris entre 0,7 et 1,3 %.

6. Matériau selon l'une des revendications précédentes, **caractérisé en ce que** les pourcentages pondéraux du manganèse et du silicium sont compris entre 0,7 et 1,3 %.

7. Matériau pour palier lisse selon l'une au moins des revendications précédentes, **caractérisé en ce que** la teneur en étain est comprise entre 10 et 20 % en poids, et en particulier entre 10 et 15 % en poids.

8. Matériau composite pour palier lisse avec une couche d'appui en métal dur et une couche de glissement métallique rapportée sur ladite couche d'appui, en particulier par laminage, **caractérisé en ce que** la couche de glissement comprend un matériau pour palier lisse selon l'une des revendications précédentes.
